# EUROPÄISCHE PATENTANMELDUNG

(11) **EP 4 721 866 A2**
(43) Veröffentlichungstag der Anmeldung: **08.04.2026**
(21) Anmeldenummer: 26159438.6
(22) Anmeldetag: 09.07.2025
(51) Int. Cl.: B02C 17/20

(54) **VERFAHREN SOWIE RÜHRWERKSSYSTEM ZUR MECHANISCHEN AKTIVIERUNG VON ORGANISCHEN UND/ODER ANORGANISCHEN STOFFEN UND/ODER STOFFGEMISCHEN IN CHEMISCHEN, PHARMAZEUTISCHEN, LEBENSMITTELTECHNISCHEN UND/ODER BAUSTOFFTECHNISCHEN ANWENDUNGEN**

(30) Priorität: 14.08.2024 DE 102024123300
(62) Teilanmeldung aus: 25188581.0
(71) Anmelder: NETZSCH Trockenmahltechnik GmbH, 95100 Selb (DE)
(72) Erfinder: BRANDT, Ann-Christin, 63796 Kahl am Main (DE); SIMON, Claus, 63755 Alzenau (DE); WÜHRL, Mario, 95100 Selb (DE)
(74) Vertreter: Isarpatent

(57) **Zusammenfassung**

Die vorliegende Erfindung schafft ein Verfahren zur mechanischen Aktivierung von organischen und/oder anorganischen Stoffen und/oder Stoffgemischen in chemischen, pharmazeutischen, lebensmitteltechnischen und/oder baustofftechnischen Anwendungen, mit den Schritten: Zuführen von einem zu aktivierenden Stoff und/oder Stoffgemisch durch eine Einlauföffnung in einen Behälter, der Aktivierungskörper bevorratet; Zuführen eines Prozessgasstroms in den Behälter, wobei der Prozessgasstrom dazu ausgebildet ist, einen Transport des zu aktivierenden Stoffes und/oder Stoffgemisches zu unterstützen und zu kühlen; mechanisches Aktivieren des Stoffes und/oder Stoffgemisches in dem Behälter mithilfe einer rotierenden Vorrichtung, wobei mindestens eine Schlageinheit der Vorrichtung mit den Aktivierungskörpern zusammenwirkt; Abführen des durch die Aktivierungskörper aktivierten Stoffes und/oder Stoffgemisches durch eine Auslauföffnung aus dem Behälter, wobei der Stoff und/oder Stoffgemisch in dem Behälter eine vorbestimmte Verweilzeit verweilt, wobei ein spezifischer Energieeintrag in den Behälter abhängig ist von zumindest einem aus der Gruppe von einer Umfangsgeschwindigkeit der mindestens einen Schlageinheit, einem Füllgrad des Behälters, einem Durchmesser der Aktivierungskörper und einer Ausformung des Behälters. Ferner schafft die vorliegende Erfindung ein Rührwerkssystem das dazu eingerichtet ist, ein solches Verfahren durchzuführen.

## Beschreibung

Die vorliegende Erfindung betrifft ein Verfahren zur mechanischen Aktivierung von organischen und/oder anorganischen Stoffen und/oder Stoffgemischen in chemischen, pharmazeutischen, lebensmitteltechnischen und/oder baustoff technischen Anwendungen. Ferner betrifft die vorliegende Erfindung ein Rührwerkssystem zur Durchführung eines solchen Verfahrens.

In der Mechanochemie geht es darum, dass Material durch eine mechanische Aktivierung, insbesondere durch Scher- und Normalbeanspruchungen, in einen aktiven Zustand versetzt wird, in dem das Material besonders reaktiv ist. Unter Mechanochemie versteht man somit die mechanische Aktivierung von chemischen Reaktionen. Dies kann unter anderem auf eine Destabilisierung der Atombindung und Änderungen der Kristallstrukturen zurückgeführt werden. Begünstigt werden die Reaktionen zudem durch die Zerkleinerung der Partikel und das Entstehen neuer reaktiver Oberflächen. Gegenüber bisherigen Reaktionen kommt die Mechanochemie ohne Lösemittel und ohne thermische Behandlung aus, welche einen negativen Einfluss auf die Umwelt und/oder auf einen mechanisch zu aktivierenden Stoff und/oder Stoffgemisch haben können.

Im Stand der Technik kommen hierzu bisher Schwingmühlen und Planetenkugelmühlen sowie Extrusionsprozesse zum Einsatz. Die dabei verwendeten Maschinen sind gekennzeichnet durch einen unzureichenden Aktivierungsgrad sowie der nur bedingt möglichen Skalierung auf einen produktionstechnischen Maßstab. Ebenso ist ein Anpassen bzw. Einstellen der geometrischen und prozesstechnischen Aktivierungsparametern an die zu aktivierenden Stoffe oder Stoffgemische derzeit nur begrenzt gegeben.

Ein Großteil der Reaktionen, die in Kugelmühlen ablaufen, werden Katalysen zugeordnet. Bekannte Reaktionen sind hier unter anderem C-N oder C-C Kreuzkopplung, Zykloadditivierung, Polymerreaktionen oder C-H Aktivierung. Ein bekannter Nachteil bei Katalysen ist, dass die Rückgewinnung des Katalysators meist nur schwer zu bewerkstelligen ist.

Das Brennen von Klinker ist der zentrale Prozess bei der Zementherstellung. Während dieses Prozesses entsteht durch die Umwandlung von CaCO3 in CaO ein erheblicher Anteil der CO2 Emissionen im gesamten Herstellungsprozesses. Um die Dekarbonisierung der Zementindustrie voran zu treiben, ist die Reduzierung dieser Primäremission durch eine Verringerung des Klinkeranteils im Zement eine vielversprechende Möglichkeit. Um die notwendigen Eigenschaften des Zements dennoch sicherzustellen, müssen alternative puzzolanische Materialen zum Einsatz kommen. Diese werden auch als supplementary cementitious materials (SCMs) bezeichnet. Mögliche Beispiele für SCMs sind Flugasche, Hüttensand, natürliche Puzzolane oder Tone. Eine mögliche Alternative zur thermischen Kalzinierung ist die mechanochemische Aktivierung. Bei der mechanochemischen Aktivierung werden die Tonminerale amorphisiert, das heißt die Kristallstrukturen der Tonminerale aufgebrochen. Diese Amorphisierung und die höheren spezifische Oberfläche sind bedeutend reaktiver als das Ausgangsmaterial. In Kontakt mit Wasser kommt es durch die erzeugten Fehlstellen zu höherer chemischer Reaktivität.

Es ist Aufgabe der vorliegenden Erfindung, ein Verfahren für chemische, pharmazeutische, lebensmitteltechnische und/oder baustofftechnische Anwendungen bereitzustellen, die ohne Lösemittel ausgeführt und auf einen hinreichenden produktionstechnischen Maßstab skaliert werden können.

Erfindungsgemäß wird diese Aufgabe jeweils durch die Gegenstände der unabhängigen Ansprüche gelöst.

Gemäß einem ersten Aspekt der Erfindung ist ein Verfahren zur mechanischen Aktivierung von organischen und/oder anorganischen Stoffen und/oder Stoffgemischen in chemischen, pharmazeutischen, lebensmitteltechnischen und/oder baustofftechnischen Anwendungen vorgesehen. Das Verfahren umfasst die Schritte:
Zuführen von einem zu aktivierenden Stoff und/oder Stoffgemisch durch eine Einlauföffnung in einen Behälter, der Aktivierungskörper bevorratet.
Zuführen eines Prozessgasstroms in den Behälter, wobei der Prozessgasstrom dazu ausgebildet ist, einen Transport des zu aktivierenden Stoffes und/oder Stoffgemisches zu unterstützen.
Mechanisches Aktivieren des Stoffes und/oder Stoffgemisches in dem Behälter mithilfe einer rotierenden Vorrichtung, wobei mindestens eine Schlageinheit der Vorrichtung mit den Aktivierungskörpern zusammenwirkt. Abführen des durch die Aktivierungskörper aktivierten Stoffes und/oder Stoffgemisches durch eine Auslauföffnung aus dem Behälter. Der Stoff und/oder Stoffgemisch verweilt in dem Behälter eine vorbestimmte Verweilzeit. Ein spezifischer Energieeintrag in den Behälter ist abhängig von zumindest einem aus der Gruppe von einer Umfangsgeschwindigkeit der mindestens einen Schlageinheit, einem Füllgrad des Behälters, einem Durchmesser der Aktivierungskörper und einer Ausformung des Behälters.

Gemäß einem zweiten Aspekt der Erfindung ist ein Rührwerkssystem zur mechanischen Aktivierung von organischen und/oder anorganischen Stoffen und/oder Stoffgemischen in chemischen, pharmazeutischen, lebensmitteltechnischen und/oder baustofftechnischen Anwendungen vorgesehen. Das Rührwerkssystem ist dazu eingerichtet, ein Verfahren nach dem ersten Aspekt der Erfindung durchzuführen.

Eine der vorliegenden Erfindung zugrunde liegende Idee besteht darin, ein Verfahren zum Betreiben eines Rührwerkssystems zur mechanischen Aktivierung von organischen und/oder anorganischen Stoffen und/oder Stoffgemischen in chemischen, pharmazeutischen, lebensmitteltechnischen und/oder baustofftechnischen Anwendungen bereitzustellen. Dabei wird anhand der Vorrichtung eine mechanische Aktivierung der in das Rührwerkssystem bzw. in den Behälter eingebrachten Stoffe und/oder Stoffgemische bewirkt, insbesondere die Durchführung von mechanochemischen Reaktionen in dem Rührwerkssystem beschleunigt oder überhaupt erst ermöglicht. Die sich im Inneren des Behälters befindlichen Aktivierungskörper werden durch die Rotationsbewegung der mindestens einen Schlageinheit bzw. der Schläger in die für die Aktivierungsreaktion gewünschte Bewegung versetzt.

Das Rührwerkssystem umfasst beispielhaft den Behälter zur Aufnahme von Aktivierungskörpern sowie von einem zu aktivierenden Stoff und/oder Stoffgemisch. Das Rührwerkssystem kann ferner eine Rührwelle umfassen, die in dem Behälter und drehbar in Bezug zu dem Behälter gelagert ist. Weiterhin kann das Rührwerkssystem die Vorrichtung oder mehrere dieser Vorrichtungen umfassen. Die Vorrichtung ist insbesondere zur mechanischen Aktivierung von organischen und/oder anorganischen Stoffen und/oder Stoffgemischen in chemischen, pharmazeutischen, lebensmitteltechnischen und/oder baustofftechnischen Anwendungen ausgebildet. Die Vorrichtung kann zum Beispiel jeweils eine scheibenartige Rührkörpereinrichtung umfassen, die auf der Rührwelle drehfest montiert ist. Die mindestens eine Schlageinheit kann dabei einen Kopfbereich mit einer Aktivierungsfläche zum Zusammenwirken mit den Aktivierungskörpern aufweisen. Die mindestens eine Schlageinheit kann radial außen in Bezug zu einer Rotationsachse der scheibenartigen Rührkörpereinrichtung an der scheibenartigen Rührkörpereinrichtung befestigt sein. Insbesondere kann die mindestens eine Schlageinheit in Bezug zu der Rotationsachse der scheibenartigen Rührkörpereinrichtung von der scheibenartigen Rührkörpereinrichtung radial bzw. in radialer Richtung abragen.

Die vorbestimmte Verweilzeit im Sinne der vorliegenden Erfindung entspricht der Zeit, in der ein definiertes Volumen des Stoffes und/oder Stoffgemisches in dem Behälter verweilt. Die Verweilzeit kann experimentell über Tracerstoffe bestimmt werden. Der Prozessgasstrom speist sich aus einer Umgebungsluft, das bedeutet der Prozessgasstrom weist im Wesentlichen die chemische Zusammensetzung von Atemluft auf. Der zu aktivierende Stoff und/oder Stoffgemisch kann insbesondere als Feststoff vorliegen.

Im Sinne der vorliegenden Erfindung bezeichnet die mechanische Aktivierung von organischen und/oder anorganischen Stoffen und/oder Stoffgemischen in chemischen, pharmazeutischen, lebensmitteltechnischen und/oder baustofftechnischen Anwendungen das Einwirken von mechanischen Belastungen bzw. Beanspruchungen auf den Stoff und/oder das Stoffgemisch, sodass chemische Reaktionen, insbesondere Reaktionen, die Polymere betreffen, in Gang gesetzt bzw. aktiviert werden. Zum Beispiel können derartige mechanische Belastungen zur Depolymerisation von Polymeren führen. Insbesondere werden bei der mechanischen Aktivierung keine Lösungsmittel oder dergleichen verwendet. Das bedeutet, die mechanische Aktivierung zur mechanochemischen Wirkung wird in einem trockenen Behälter durchgeführt.

Ein Vorteil der vorliegenden Erfindung ist, dass keine Nebenprodukte entstehen. Ein weiterer Vorteil ist, dass durch das erfindungsgemäße Verfahren deutlich weniger Energie benötigt wird und/oder die Reaktion des Stoffes und/oder Stoffgemisches stark beschleunigt ablaufen kann.

Darüber hinaus können ein Aktivierungsgrad erhöht und eine Skalier- und Anpassungsfähigkeit für unterschiedliche Anwendungen verbessert werden.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der vorliegenden Erfindung beträgt die vorbestimmte Verweilzeit von etwa 0,1 min bis etwa 120 min, beispielsweise von etwa 3 min bis etwa 90 min, vorzugsweise von etwa 10 min bis etwa 55 min, insbesondere etwa 20 min. Dabei kann ein direkter Zusammenhang zwischen der Aktivierung des Stoffes und/oder Stoffgemisches und der vorbestimmten Verweilzeit vorliegen. Das bedeutet, die vorbestimmte Verweilzeit kann einen direkten Einfluss auf einen Aktivierungsgrad aufweisen und damit die Reaktivität beeinflussen.

Der Prozessgasstrom kann den Transport des zu aktivierenden Stoffes und/oder Stoffgemisches unterstützen, indem zum Beispiel der Transport geregelt oder gesteuert wird. Alternativ oder zusätzlich kann der zu aktivierende Stoff und/oder Stoffgemisch und der Behälter durch den Prozessgasstrom temperiert, beispielsweise gekühlt, werden.

Gemäß einer weiteren Ausführungsform der vorliegenden Erfindung umfasst der Prozessgasstrom zumindest einen aus der Gruppe von einem Fluidisierungsgasstrom bzw. Kühlluftstrom, der durch die Einlauföffnung in den Behälter strömt, einem Spaltgasstrom, der durch eine Zusatzöffnung in den Behälter strömt, und einem Bypassgasstrom, der durch eine Bypassöffnung in einen Auslassbereich des Behälters strömt. Somit kann dem Behälter an verschiedenen Stellen ein Luftstrom zugeführt werden, welcher insgesamt den Prozessgasstrom ergibt. Der Fluidisierungsgasstrom, der Spaltgasstrom und der Bypassgasstrom können beispielsweise eine Umgebungsluft enthalten, das heißt im Wesentlichen die chemische Zusammensetzung von Atemluft aufweisen. Alternativ oder zusätzlich kann der Fluidisierungsgasstrom, der Spaltgasstrom und/oder der Bypassgasstrom im Wesentlichen Kohlendioxid, Argon, Stickstoff, Wasserstoff oder ein sonstiges Gas enthalten. Dabei können der Fluidisierungsgasstrom, der Spaltgasstrom und der Bypassgasstrom das gleiche Gas sein oder zumindest eines davon sich von den anderen unterscheiden.

Gemäß einer weiteren Ausführungsform der vorliegenden Erfindung wird die vorbestimmte Verweilzeit mittels mindestens einem aus der Gruppe von einer Durchsatzmenge des Stoffes und/oder Stoffgemisches, einer Gesamtmenge des Prozessgasstroms und einer Anwendungshäufigkeit der Schritte Zuführen, mechanisches Aktivieren und Abführen eingestellt. Somit kann die vorbestimmte Verweilzeit durch mindestens eine dieser drei Stellgrößen beeinflusst werden.

Gemäß einer Weiterbildung der vorliegenden Erfindung liegt die Durchsatzmenge in einem Bereich von etwa 8 kg/h bis etwa 100.000 kg/h, beispielsweise in einem Bereich von etwa 10 kg/h bis etwa 600 kg/h oder von etwa 1.000 kg/h bis etwa 20.000 kg/h, insbesondere bei etwa 75 kg/h. Die Durchsatzmenge kann in Abhängigkeit von einer Nennleistung des Rührwerkssystems festgelegt werden. Auf diese Weise kann die Verweilzeit je nach einer Größe des Rührwerkssystems in einem optimalen Bereich eingestellt werden. Zum Beispiel kann für ein Rührwerkssystem mit einer Nennleistung von etwa 150 kW die Durchsatzmenge in einem Bereich von 10 kg/h bis 600 kg/h, insbesondere bei etwa 75 kg/h, liegen. Für ein Rührwerkssystem mit einer Nennleistung von etwa 3 MW kann die Durchsatzmenge in einem Bereich von 1.000 kg/h bis 20.000 kg/h liegen. Für ein Rührwerkssystem mit einer Nennleistung von etwa 12 MW kann die Durchsatzmenge zum Beispiel in einem Bereich von 1.000 kg/h bis 100.000 kg/h liegen. Eine Skalierung kann dabei nach einem spezifischem Energieeintrag und der vorbestimmten Verweilzeit erfolgen.

Gemäß einer weiteren Weiterbildung der vorliegenden Erfindung wird die Gesamtmenge des Prozessgasstroms nahezu konstant gehalten und ist eine Summe aus dem Fluidisierungsgasstrom, dem Spaltgasstrom und dem Bypassgasstrom. Um eine Gesamtmenge des Prozessgasstroms durch den Behälter konstant zu halten, kann zum Beispiel der Bypassgasstrom so geregelt werden, dass er an eine Menge des zu aktivierenden Stoffes und/oder Stoffgemisches bzw. an die Materialmenge angepasst wird. Ein Mengendurchsatz des zu aktivierenden Stoffes und/oder Stoffgemisches durch den Behälter kann zum Beispiel 0,8 kg/m³ betragen. ProzessgasstromDie Gesamtmenge des Prozessgasstroms kann zum Beispiel aus dem Quotient von der Durchsatzmenge und 0,1-2,0 kg/m³ berechnet werden.

Der Fluidisierungsgasstrom, der Spaltgasstrom und der Bypassgasstrom können durch eine Hauptgebläseeinrichtung dem Behälter zugeführt und abgeführt werden, indem die Hauptgebläseeinrichtung stromabwärts der Auslauföffnung angeordnet ist und einen Unterdruck an der Auslauföffnung im Verhältnis zu einem Umgebungsdruck erzeugt, so dass der Fluidisierungsgasstrom, der Spaltgasstrom und der Bypassgasstrom durch ihre jeweilige Öffnung in den Behälter gesaugt werden. Das heißt, die Hauptgebläseeinrichtung kann mit anderen Worten im Unterdruck betrieben werden.

Zusätzlich kann stromaufwärts der Einlauföffnung, der Zusatzöffnung und/oder der Bypassöffnung jeweils eine Gebläseeinrichtung angeordnet sein, um das Zuführen des Fluidisierungsgasstroms, des Spaltgasstroms oder des Bypassgasstroms zu unterstützen. Das bedeutet, der Fluidisierungsgasstrom, der Spaltgasstrom und/oder der Bypassgasstrom können jeweils über ein positives Druckgebläse bzw. die Gebläseeinrichtung in den Behälter eingebracht werden. Vorzugsweise kann die Gebläseeinrichtung für den Fluidisierungsgasstrom auf einen konstanten Volumenstrom geregelt werden. Durch die Kombination von Unterdruckgebläse und Überdruckgebläsen, also von der Hauptgebläseeinrichtung und den optionalen Gebläseeinrichtungen, kann ein benötigtes Gesamtdruckgefälle des Rührwerkssystems in energetisch sinnvolle Druckabschnitte eingeteilt und das Rührwerkssystem im optimalen Betriebspunkt gefahren bzw. betrieben werden.

Darüber hinaus kann zwischen der Gebläseeinrichtung und der jeweiligen Öffnung ein Wärmetauscher angeordnet sein, um den Fluidisierungsgasstrom, den Spaltgasstrom oder den Bypassgasstrom zu temperieren.

Gemäß einer weiteren Weiterbildung der vorliegenden Erfindung weist der Fluidisierungsgasstrom in Bezug auf einen radial zu der Rührwelle orientierten Querschnitt des Behälters eine Strömungsgeschwindigkeit im Bereich von etwa 0,1 m/s bis etwa 10 m/s auf. Beispielsweise kann der Fluidisierungsgasstrom auf den radial zu der Rührwelle orientierten Querschnitt zwischen der Vorrichtung und einem Trennsystem, also stromabwärts der Vorrichtung und stromaufwärts des Trennsystems, bezogen werden.

Gemäß einer weiteren Ausführungsform der vorliegenden Erfindung weist der Prozessgasstrom an der Auslauföffnung eine Strömungsgeschwindigkeit im Bereich von etwa 10 m/s bis etwa 30 m/s, insbesondere im Bereich von etwa 15 m/s bis etwa 25 m/s, auf.

Optional kann die Rührwelle, die Vorrichtung und/oder die mindestens eine Schlageinheit von dem Fluidisierungsgasstrom umspült werden, damit der Stoff und/oder Stoffgemisch aus dem Behälter transportiert wird ohne dabei die vorbestimmte Verweilzeit zu verändern.

Gemäß einer weiteren Ausführungsform der vorliegenden Erfindung umfasst eine Anwendungshäufigkeit der Schritte Zuführen, mechanisches Aktivieren und Abführen in dieser Reihenfolge eins bis sechs Durchläufe, insbesondere eins bis drei Durchläufe. Die Anwendungshäufigkeit ist dabei nicht auf ein spezifisches Rührwerkssystem beschränkt, sondern kann bei N Durchläufen in N hintereinandergeschalteten Rührwerkssystemen oder durch die wiederholte Nutzung eines einzelnen Rührwerkssystems durchgeführt werden. Ebenfalls können bis zu N-1 Durchläufe anhand eines einzelnen Rührwerkssystems durchgeführt werden und die verbleibenden Durchläufe anhand eines nachgeschalteten Rührwerkssystems durchgeführt werden. Die Anwendungshäufigkeit kann dabei in Abhängigkeit der Durchsatzmenge gewählt werden.

Erfindungsgemäß ist ein spezifischer Energieeintrag in den Behälter abhängig von zumindest einem aus der Gruppe von einer Umfangsgeschwindigkeit der mindestens einen Schlageinheit, einem Füllgrad des Behälters, einem Durchmesser der Aktivierungskörper und einer Ausformung des Behälters. Durch den spezifischen Energieeintrag kann der Aktivierungsgrad direkt beeinflusst werden. Die Umfangsgeschwindigkeit kann beispielsweise an einem radial äußeren Ende der mindestens einen Schlageinheit vorliegen.

Der Füllgrad entspricht einem durch die Aktivierungskörper belegten Volumen im Verhältnis zu einem Gesamtinnenvolumen des Behälters. Der Durchmesser kann insbesondere ein kugeläquivalenter Durchmesser der Aktivierungskörper sein. Die Umfangsgeschwindigkeit und der Füllgrad entsprechen prozesstechnischen Aktivierungsparametern. Anhand einer vorbestimmten Kombination von verschiedenen konstruktiven Aktivierungsparametern und von verschiedenen prozesstechnischen Aktivierungsparametern, wie den oben genannten, kann der zu aktivierende Stoff und/oder das Stoffgemisch durch die Aktivierungszonen geführt werden. Somit kann ein optimaler mechanochemischer Reaktionsablauf bereitgestellt werden. Die konstruktiven Aktivierungsparameter umfassen zum Beispiel unterschiedliche geometrische Ausführungen der scheibenartigen Rührkörpereinrichtung, des Verlängerungsarms und/oder des Kopfbereichs der Schlageinheit.

Gemäß einer weiteren Weiterbildung der vorliegenden Erfindung beträgt der spezifische Energieeintrag etwa 0,05 kWh/kg bis etwa 6 kWh/kg, insbesondere etwa 0,1 kWh/kg bis etwa 4 kWh/kg, besonders bevorzugt etwa 0,7 kWh/kg.

Gemäß einer weiteren Ausführungsform der vorliegenden Erfindung weist die mindestens eine Schlageinheit, insbesondere ein radial äußeres Ende der mindestens einen Schlageinheit, eine Umfangsgeschwindigkeit im Bereich von etwa 1 m/s bis etwa 10 m/s, beispielsweise im Bereich von etwa 3,5 m/s bis etwa 8 m/s, insbesondere im Bereich von etwa 4,3 m/s bis etwa 6,5 m/s und/oder im Bereich von etwa 7 m/s bis etwa 8 m/s, besonders bevorzugt von etwa 5,8 m/s, auf. Damit kann durch eine Auszentrifugation der Aktivierungskörper der Aktivierungsgrad verbessert werden. Zum Beispiel kann für ein Rührwerkssystem mit einer Nennleistung von etwa 150 kW die Umfangsgeschwindigkeit etwa 5,8 m/s aufweisen.

Gemäß einer weiteren Ausführungsform der vorliegenden Erfindung weist der Behälter einen Füllgrad von etwa 40 % bis etwa 80 %, beispielweise von etwa 50 % bis etwa 70 %, insbesondere von etwa 55 % bis etwa 65 %, besonders bevorzugt etwa 60 %, auf.

Gemäß einer weiteren Ausführungsform der vorliegenden Erfindung sind die Aktivierungskörper im Wesentlichen kugelförmig ausgebildet, wobei ein kugeläquivalenter Durchmesser der Aktivierungskörper im Bereich von etwa 1 mm bis etwa 20 mm, beispielsweise im Bereich von etwa 1 mm bis etwa 4 mm oder im Bereich von etwa 4 mm bis etwa 12 mm, insbesondere im Bereich von etwa 4 mm bis etwa 8 mm, liegt. Der kugeläquivalente Durchmesser kann besonders bevorzugt etwa 6 mm betragen. Der kugeläquivalente Durchmesser kann dabei in Abhängigkeit von einem notwendigen spezifischen Energieeintrag für den zu aktivierenden Stoff und/oder Stoffgemisch gewählt werden, beispielsweise 6 mm bei einem ergänzenden zementären Material, auch supplementary cementitious material oder kurz SCM genannt, und bei einem Rührwerkssystem mit einer Nennleistung von etwa 150 kW.

Zum Beispiel kann ein radial äußeres Ende der mindestens einen Schlageinheit einen Abstand zu dem Behälter im Bereich des zweifachen bis zehnfachen eines Durchmessers der Aktivierungskörper aufweisen. Auf diese Weise können die Aktivierungskörper an der mindestens einen Schlageinheit vorbeiströmen, wobei eine gewünschte Aktivierungswirkung durch die mindestens eine Schlageinheit sicher gestellt werden kann.

Die Aktivierungskörper können aus Stahl, Keramik, Kunststoff, Verbundmaterial, reaktivem Werkstoff wie beispielsweise Palladium, und/oder einer Werkstoffkombination daraus hergestellt sein. Darüber hinaus können die Aktivierungskörper mit einem der zuvor genannten Werkstoffe oder einer Werkstoffkombination daraus beschichtet sein.

Gemäß einer weiteren Ausführungsform der vorliegenden Erfindung weist der Behälter eine Innentemperatur im Bereich von etwa 10 °C bis etwa 400 °C, beispielsweise im Bereich von etwa 20 °C bis etwa 250 °C, insbesondere im Bereich von etwa 100 °C bis etwa 200 °C, auf. Zum Beispiel kann die Innentemperatur abhängig von Eigenschaften, wie zum Beispiel einer Temperatur und/oder einer Menge, eines Kühlmediums zur Kühlung des Behälters gewählt werden. Ferner kann der Behälter einen Doppelmantel zur thermischen Regulierung seines Innenraums gegenüber einer Umgebung aufweisen. Dabei kann die thermische Regulierung mithilfe von Wasser bewirkt werden, welches in dem Doppelmantel enthalten ist. Alternativ oder zusätzlich kann die Innentemperatur abhängig von einer Temperatur und/oder der Gesamtmenge des Prozessgasstroms gewählt werden.

Beim mechanischen Aktivieren kann der zu aktivierende Stoff und/oder Stoffgemisch zum Beispiel eine Vielzahl von voneinander verschiedenen Aktivierungszonen durchströmen, die entlang einer Durchströmungsrichtung des zu aktivierenden Stoffes und/oder Stoffgemisches nacheinander in dem Behälter angeordnet sind. Dabei kann eine Anzahl, eine Art und/oder eine Ausgestaltung der Vielzahl von voneinander verschiedenen Aktivierungszonen in Abhängigkeit des zu aktivierenden Stoffes und/oder Stoffgemisches gewählt sein.

Die Durchströmungsrichtung korrespondiert zum Beispiel mit der Rotationsachse der scheibenartigen Rührkörpereinrichtung beziehungsweise der Rührwelle. Der Behälter kann ein Verhältnis von Länge zu Durchmesser in einem Bereich von etwa 1 bis etwa 5, insbesondere im Bereich von etwa 2 bis etwa 3, aufweisen. Vorzugsweise ist der Behälter zylinderförmig ausgebildet. Die Rotationsachse der Rührwelle kann zum Beispiel im Wesentlichen horizontal in dem Behälter ausgerichtet sein. Insbesondere kann die Rührwelle zentrisch in dem Behälter drehbar angebracht sein.

Darüber hinaus kann der Behälter feststehend in Bezug zu einer Umgebung sein. Optional kann der Behälter an seiner Innenseite eine Beschichtung aufweisen. Die Beschichtung kann ein reaktives Material, zum Beispiel Palladium, enthalten. Durch die Beschichtung kann die mechanochemische Reaktionswirkung in dem Behälter verbessert oder überhaupt ermöglicht werden.

Beispielhaft umfasst die Vielzahl von voneinander verschiedenen Aktivierungszonen zumindest eine Aktivierungszone ausgewählt aus der Gruppe von einer Einlaufzone zum verbesserten Einzug des zu aktivierenden Stoffes und/oder Stoffgemisches, einer Zerkleinerungszone zur Bereitstellung einer für die Aktivierung geeigneten Partikelgrößenverteilung, einer Aktivierungszone zur Schaffung einer größtmöglichen Aktivierung, einer Relaxationszone und einer Austragszone zur Rückhaltung der Aktivierungskörper und Vermeidung von Reaktionsprozessen des aktivierten Stoffes und/oder Stoffgemisches. Beispielsweise sind die zuvor genannten Aktivierungszonen in der genannten Reihenfolge entlang der Durchströmungsrichtung angeordnet. Die Vielzahl von voneinander verschiedenen Aktivierungszonen können zum Beispiel die Einlaufzone, die Zerkleinerungszone, die Aktivierungszone und die Austragszone umfassen. Die Relaxationszone kann dabei optional ergänzt werden.

Dabei kann die Einlaufzone zumindest ein Einlaufwerkzeug aufweisen, wobei das Einlaufwerkzeug insbesondere als Einzugsschnecke, als Vorbrechelement oder vergleichbares ausgebildet ist. Das zumindest eine Einlaufwerkzeug kann mehrere Einlaufwerkzeuge gleicher Art oder verschiedener Art kombinieren. Die Zerkleinerungszone bzw. Voraktivierungszone kann insbesondere dazu ausgebildet sein, eine für die Aktivierung geeignete Partikelgrößenverteilung zu erzielen, wobei je nach Art des zu aktivierenden Stoffes und/oder Stoffgemisches eine Erzeugung oder Vermeidung von Feinstanteil vorgesehen ist. Weiterhin kann die Aktivierungszone dazu ausgebildet sein, eine größtmögliche Aktivierung über eine Steuerung einer Verweilzeit in der Aktivierungszone und eine Beanspruchungsart und Beanspruchungsintensität in der Aktivierungszone zu erreichen. Die Austragszone bzw. Auslaufzone kann ein Trennsystem zur Rückhaltung der Aktivierungskörper und Vermeidung von Reaktionsprozessen des aktivierten Stoffes und/oder Stoffgemisches aufweisen.

Optional kann der Behälter einen Doppelmantel zur thermischen Regulierung seines Innenraums gegenüber einer Umgebung aufweisen. Alternativ oder zusätzlich kann das Rührwerkssystem ein Temperieraggregat zum Heizen oder Kühlen des Behälters aufweisen. Dabei kann das Temperieraggregat mit dem Behälter thermisch gekoppelt sein. Auf diese Weise kann der Behälter bzw. sein Innenraum gemäß der für eine Aktivierungsreaktion erforderlichen Temperatur beheizt, gekühlt oder sowohl beheizt als auch gekühlt werden.

Weiterhin kann abhängig von der Aktivierungsreaktion eine Bewegung der Aktivierungskörper, die zu einer Stoßbeanspruchung und/oder einer Scherbeanspruchung führt, einstellbar sein.

Die Einlauföffnung und die Auslauföffnung können zum Beispiel auf gegenüberliegenden Seiten des Behälters angeordnet sein. Im Bereich der Einlauföffnung kann zum Beispiel das Vorbrechelement angeordnet, insbesondere angebracht, sein. Alternativ oder zusätzlich kann die Auslauföffnung an der Austragszone angeordnet sein. Dabei kann das Trennsystem in die Auslauföffnung eingebaut sein.

Zur Unterstützung oder Verbesserung der Aktivierungsreaktion kann über eine zusätzliche Öffnung des Behälters ein Reaktionsgas, ein Fluid oder ein Feststoff in den Behälter zugegeben werden.

Optional kann das Rührwerkssystem ferner eine Distanzbuchse umfassen, die zwischen benachbarten Vorrichtungen auf der Rührwelle montiert ist. Dabei kann die Distanzbuchse zum Beispiel eine Durchgangsöffnung aufweisen, die mit der Durchgangsöffnung der scheibenartigen Rührkörpereinrichtung korrespondiert, sodass die Durchgangsöffnung der Distanzbuchse und die Durchgangsöffnung der scheibenartigen Rührkörpereinrichtung eine gemeinsame Durchgangsöffnung bilden können. Mit anderen Worten können die Durchgangsöffnung der Distanzbuchse und die Durchgangsöffnung der scheibenartigen Rührkörpereinrichtung in einer Flucht angeordnet sein. Damit kann eine Luftführung und folglich eine Steuerung einer Strömungsrichtung und einer Strömungsgeschwindigkeit beeinflusst werden. Die Distanzbuchse kann im Durchmesser und in der Form variieren. Die Distanzbuchse dient insbesondere einer gezielten Führung der Luft und des zu aktivierenden Stoffes und/oder Stoffgemisches durch den Behälter.

Zum Beispiel kann die Rührwelle einteilig oder mehrteilig ausgebildet sein. Alternativ oder zusätzlich kann die Rührwelle als Massivwelle oder als Hohlwelle ausgebildet sein. Alternativ oder zusätzlich kann die Rührwelle motorisch angetrieben werden. Zum Beispiel kann die Rührwelle durch einen außerhalb des Behälters angeordneten Motor angetrieben werden, wobei der Motor in der Drehzahl variiert werden kann.

Optional weist die scheibenartige Rührkörpereinrichtung mindestens eine Durchgangsöffnung auf, die sich in Richtung der Rotationsachse erstreckt. Darüber hinaus kann eine Größe der mindestens einen Durchgangsöffnung veränderbar sein, sodass eine Durchlässigkeit der scheibenartigen Rührkörpereinrichtung variiert werden kann. Auf diese Weise kann eine durchströmende Luftmenge und ein zu aktivierender Stoff und/oder Stoffgemisch gezwungen werden die scheibenartige Rührkörpereinrichtung zum umströmen. Insbesondere kann die mindestens eine Durchgangsöffnung eine Vielzahl von Durchgangsöffnungen aufweisen, die in einer Umfangsrichtung der scheibenartigen Rührkörpereinrichtung gleichmäßig verteilt angeordnet sind. Somit kann der Stoff und/oder das Stoffgemisch die scheibenartige Rührkörpereinrichtung passieren bzw. durchströmen ohne in Kontakt mit der mindestens einen Schlageinheit zu kommen.

Die obigen Ausführungsformen und Weiterbildungen lassen sich, sofern sinnvoll, beliebig miteinander kombinieren. Insbesondere sind sämtliche Merkmale der Vorrichtung auf das zugehörige Verfahren übertragbar, und umgekehrt. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:

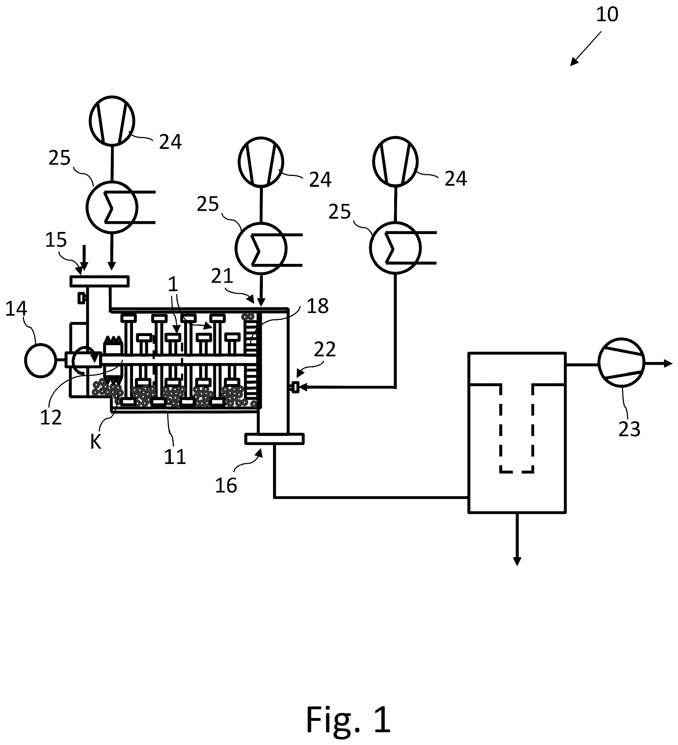

- Fig. 1: eine schematische Ansicht eines Rührwerkssystems zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem Ausführungsbeispiel der Erfindung;

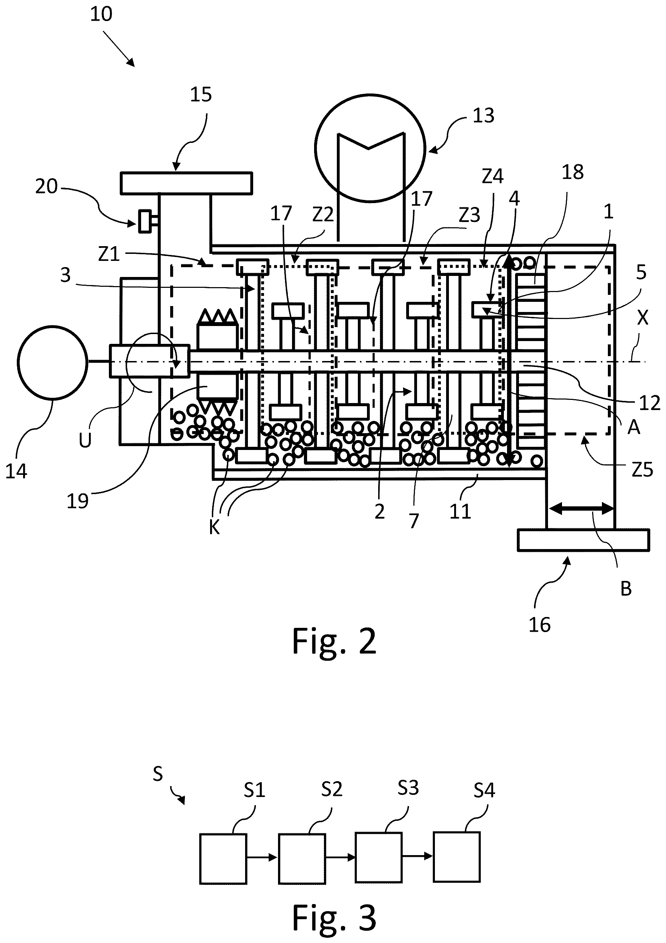

- Fig. 2: eine schematische Schnittansicht eines Rührwerkssystems zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung; und
- Fig. 3: ein schematisches Ablaufdiagramm eines Verfahrens zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung.

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Fig. 1 zeigt eine schematische Ansicht eines Rührwerkssystems 10 zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem Ausführungsbeispiel der Erfindung.

Das Rührwerkssystem 10 umfasst beispielhaft einen Behälter 11 zur Aufnahme von Aktivierungskörpern K sowie von einem zu aktivierenden Stoff und/oder Stoffgemisch, einen Motor 14, eine Einlauföffnung 15, eine Auslauföffnung 16, eine Zusatzöffnung 21, eine Bypassöffnung 22, eine Hauptgebläseeinrichtung 23 und drei Gebläseeinrichtungen 24.

Darüber hinaus umfasst das Rührwerkssystem 10 eine Vielzahl von Vorrichtungen 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen. Die Vorrichtung 1 kann auf einer drehbaren Rührwelle 12 drehfest montiert sein. Die Rührwelle 12 ist zum Beispiel in dem Behälter 11 und drehbar in Bezug zu dem Behälter 11 gelagert.

Das Rührwerkssystem 10 ist insbesondere dazu eingerichtet, den zu aktivierenden Stoff und/oder Stoffgemisch durch die Einlauföffnung 15 in den Behälter 11 zuzuführen, wobei der Behälter 11 die Aktivierungskörper K bevorratet, und einen Prozessgasstrom in den Behälter 11 zuzuführen, wobei der Prozessgasstrom dazu ausgebildet ist, einen Transport des zu aktivierenden Stoffes und/oder Stoffgemisches zu unterstützen und dabei den zu aktivierenden Stoff und/oder Stoffgemisch zu kühlen. Der Prozessgasstrom kann einen Fluidisierungsgasstrom, der durch die Einlauföffnung 15 in den Behälter 11 strömt, einen Spaltgasstrom, der durch die Zusatzöffnung 21 in den Behälter 11 strömt, oder einen Bypassgasstrom, der durch die Bypassöffnung 22 in einen Auslassbereich des Behälters 11 strömt, umfassen. Der Prozessgasstrom kann ebenso zwei oder drei der zuvor genannten Luftströme umfassen.

Ferner ist das Rührwerkssystem 10 insbesondere dazu eingerichtet, den Stoff und/oder Stoffgemisch in dem Behälter 11 mithilfe der rotierenden Vorrichtungen 1 mechanisch zu aktivieren. Dabei wirkt mindestens eine Schlageinheit 3 der Vorrichtung 1 mit den Aktivierungskörpern K zusammen.

Darüber hinaus ist das Rührwerkssystem 10 insbesondere dazu eingerichtet, den durch die Aktivierungskörper K aktivierten Stoff und/oder Stoffgemisch durch die Auslauföffnung 16 aus dem Behälter 11 abzuführen. Der Stoff und/oder Stoffgemisch verweilt in dem Behälter 11 eine vorbestimmte Verweilzeit.

Der Behälter 11 kann einen Füllgrad von etwa 40 % bis etwa 80 %, beispielsweise von etwa 50 % bis etwa 70 %, insbesondere von etwa 55 % bis etwa 65 %, besonders bevorzugt etwa 60 %, aufweisen.

Beispielsweise können die Aktivierungskörper K im Wesentlichen kugelförmig ausgebildet sein, wobei ein kugeläquivalenter Durchmesser der Aktivierungskörper K im Bereich von etwa 1 mm bis etwa 20 mm, beispielsweise im Bereich von etwa 1 mm bis etwa 4 mm oder im Bereich von etwa 4 mm bis etwa 12 mm, insbesondere im Bereich von etwa 4 mm bis etwa 8 mm, liegt. Der kugeläquivalente Durchmesser kann besonders bevorzugt etwa 6 mm betragen. Der kugeläquivalente Durchmesser kann dabei in Abhängigkeit von einem notwendigen spezifischen Energieeintrag für den zu aktivierenden Stoff und/oder Stoffgemisch gewählt werden, beispielsweise 6 mm bei einem ergänzenden zementären Material, auch supplementary cementitious material oder kurz SCM genannt, und bei einem Rührwerkssystem mit einer Nennleistung von etwa 150 kW.

Die Aktivierungskörper K können aus Stahl, Keramik, Kunststoff, Verbundmaterial, reaktivem Werkstoff wie beispielsweise Palladium, und/oder einer Werkstoffkombination daraus hergestellt sein. Darüber hinaus können die Aktivierungskörper K mit einem der zuvor genannten Werkstoffe oder einer Werkstoffkombination daraus beschichtet sein.

Die Hauptgebläseeinrichtung 23 ist hier beispielhaft stromabwärts der Auslauföffnung 16 angeordnet und kann einen Unterdruck an der Auslauföffnung 16 im Verhältnis zu einem Umgebungsdruck erzeugen, so dass der Prozessgasstrom in den Behälter 11 und aus der Auslauföffnung 16 heraus gesaugt wird. Folglich kann die Hauptgebläseeinrichtung 23 im Unterdruck betrieben werden. Zusätzlich kann stromaufwärts der Einlauföffnung 15, der Zusatzöffnung 21 und/oder der Bypassöffnung 22jeweils die Gebläseeinrichtung 24 angeordnet sein, um das Zuführen des Fluidisierungsgasstroms, des Spaltgasstroms oder des Bypassgasstroms zu unterstützen. Das bedeutet, der Fluidisierungsgasstrom, der Spaltgasstrom und/oder der Bypassgasstrom können jeweils über ein positives Druckgebläse bzw. die Gebläseeinrichtung 24 in den Behälter 11 eingebracht werden. Vorzugsweise kann die Gebläseeinrichtung 24 für den Fluidisierungsgasstrom auf einen konstanten Volumenstrom geregelt werden. Durch die Kombination von Unterdruckgebläse und Überdruckgebläsen, also von der Hauptgebläseeinrichtung 23 und den optionalen Gebläseeinrichtungen 24, kann ein benötigtes Gesamtdruckgefälle des Rührwerkssystems 10 in energetisch sinnvolle Druckabschnitte eingeteilt und das Rührwerkssystem 10 im optimalen Betriebspunkt gefahren bzw. betrieben werden.

Darüber hinaus kann zwischen der Gebläseeinrichtung 24 und der jeweiligen Öffnung 15; 21; 22 ein Wärmetauscher 25 angeordnet sein, um den Fluidisierungsgasstrom, den Spaltgasstrom oder den Bypassgasstrom zu temperieren.

Fig. 2 zeigt eine schematische Schnittansicht eines Rührwerkssystems 10 zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung.

Das Rührwerkssystem 10 umfasst beispielhaft einen Behälter 11 zur Aufnahme von Aktivierungskörpern K sowie von einem zu aktivierenden Stoff und/oder Stoffgemisch, eine Rührwelle 12, ein Temperieraggregat 13 zum Heizen oder Kühlen des Behälters 11, einen Motor 14, eine Einlauföffnung 15, eine Auslauföffnung 16, zwei Distanzbuchsen 17, ein Trennsystem 18, ein Vorbrechelement 19 und eine zusätzliche Öffnung 20.

Darüber hinaus umfasst das Rührwerkssystem 10 eine Vielzahl von Vorrichtungen 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen. Jede Vorrichtung 1 umfasst eine scheibenartige Rührkörpereinrichtung 2, die auf der Rührwelle 12 drehfest montiert ist, sowie eine Vielzahl von Schlageinheiten 3. Die Vielzahl von Schlageinheiten 3 weist jeweils einen Kopfbereich 4 mit einer Aktivierungsfläche 5 zum Zusammenwirken mit den Aktivierungskörpern K auf. Die Vielzahl von Schlageinheiten 3 ist radial außen in Bezug zu einer Rotationsachse X der scheibenartigen Rührkörpereinrichtung 2 an der scheibenartigen Rührkörpereinrichtung 2 befestigt. Insbesondere kann die Vielzahl von Schlageinheiten 3 in Bezug zu der Rotationsachse X der scheibenartigen Rührkörpereinrichtung 2 von der scheibenartigen Rührkörpereinrichtung 2 radial bzw. in radialer Richtung abragen.

Wie in Fig. 2 beispielhaft illustriert ist, können die Vielzahl von Vorrichtungen 1 in Reihe auf der Rührwelle 12 angeordnet sein. Zum Beispiel kann die Vielzahl bzw. Anzahl von Vorrichtungen 4 bis 20, insbesondere 7 bis 15, besonders bevorzugt 8, betragen. Alternativ oder zusätzlich kann die Vielzahl bzw. Anzahl von Vorrichtungen 1 abhängig von dem Durchmesser der Aktivierungskörper K und einem Verhältnis von Länge zu Durchmesser des Behälters 11 sein.

Die Schlageinheiten 3 benachbarter Vorrichtungen der Vielzahl von Vorrichtungen 1 können zum Beispiel jeweils mit einem Versatz von 5° bis 90° zueinander auf der Rührwelle 12 angeordnet sein. Somit können die Aktivierungsflächen 5 vergrößert und/oder die Abstände zwischen den benachbarten Vorrichtungen verringert werden, ohne dass die Schlageinheiten 3 der benachbarten Vorrichtungen 1 miteinander kollidieren. Alternativ können jeweils die Schlageinheiten 3 benachbarter Vorrichtungen der Vielzahl von Vorrichtungen 1 in einer Flucht zueinander auf der Rührwelle 12 angeordnet sein.

Die Rührwelle 12 ist in dem Behälter 11 und drehbar in Bezug zu dem Behälter 11 gelagert. Dabei kann ein radial äußeres Ende der jeweiligen Schlageinheit 3 einen Abstand zu dem Behälter 11 im Bereich des zweifachen bis zehnfachen eines Durchmessers der Aktivierungskörper K aufweisen. Zum Beispiel können die Aktivierungskörper K im Wesentlichen kugelförmig ausgebildet sein, wie dies schematisch in Fig. 2 dargestellt ist, wobei ein kugeläquivalenter Durchmesser der Aktivierungskörper K im Bereich von etwa 1 mm bis etwa 15 mm liegt. Die Aktivierungskörper K können aus Stahl, Keramik, Kunststoff, Verbundmaterial, und/oder reaktivem Werkstoff wie beispielsweise Palladium hergestellt sein. Alternativ oder zusätzlich können die Aktivierungskörper K aus einer Werkstoffkombination der zuvor genannten Werkstoffe hergestellt sein. Darüber hinaus können die Aktivierungskörper K mit einem der zuvor genannten Werkstoffe oder einer Werkstoffkombination daraus beschichtet sein.

Optional kann der Behälter 11 einen Doppelmantel zur thermischen Regulierung seines Innenraums gegenüber einer Umgebung aufweisen. Das Temperieraggregat 13 kann mit dem Behälter 11 thermisch gekoppelt sein. Auf diese Weise kann der Behälter 11 bzw. sein Innenraum gemäß der für eine Aktivierungsreaktion erforderlichen Temperatur beheizt, gekühlt oder sowohl beheizt als auch gekühlt werden.

Weiterhin kann abhängig von der Aktivierungsreaktion eine Bewegung der Aktivierungskörper K, die zu einer Stoßbeanspruchung und/oder einer Scherbeanspruchung führt, einstellbar sein.

Der Motor 14 kann zum Beispiel außerhalb des Behälters 11 angeordnet sein und die Rührwelle 12 motorisch antreiben. Der Motor 14 kann dabei in der Drehzahl variierbar ausgebildet und betreibbar sein.

Die Einlauföffnung 15 und die Auslauföffnung 16 können zum Beispiel auf gegenüberliegenden Seiten des Behälters 11 angeordnet sein. Im Bereich der Einlauföffnung 15 kann zum Beispiel das Vorbrechelement 19 angeordnet, insbesondere angebracht, sein. Alternativ oder zusätzlich kann das Trennsystem 18 in die Auslauföffnung 16 eingebaut sein.

Die Distanzbuchse 17 kann zwischen benachbarten Vorrichtungen 1 auf der Rührwelle 12 montiert sein. Die Distanzbuchsen 17 sind in Fig. 2 als gestrichelte Linie schematisch dargestellt.

Zur Unterstützung oder Verbesserung der Aktivierungsreaktion kann über die zusätzliche Öffnung 20 des Behälters 11 ein Reaktionsgas, ein Fluid oder ein Feststoff in den Behälter 11 zugegeben werden.

Wie in Fig. 2 beispielhaft anhand von gestrichelten bzw. gepunkteten Rechtecken dargestellt ist, kann der Behälter 11 eine Vielzahl von voneinander verschiedenen Aktivierungszonen Z1, Z2, Z3, Z4, Z5 aufweisen, die entlang einer Durchströmungsrichtung des zu aktivierenden Stoffes und/oder Stoffgemisches nacheinander angeordnet sind. Dabei kann eine Anzahl, eine Art und/oder eine Ausgestaltung der Vielzahl von voneinander verschiedenen Aktivierungszonen Z1, Z2, Z3, Z4, Z5 in Abhängigkeit des zu aktivierenden Stoffes und/oder Stoffgemisches gewählt sein. Die Durchströmungsrichtung korrespondiert zum Beispiel mit der Rotationsachse X der scheibenartigen Rührkörpereinrichtung 2 beziehungsweise der Rührwelle 12.

Der Behälter 11 kann ein Verhältnis von Länge zu Durchmesser in einem Bereich von etwa 2 bis etwa 5 aufweisen. Vorzugsweise ist der Behälter 11 zylinderförmig ausgebildet. Die Rotationsachse X der Rührwelle 12 kann zum Beispiel im Wesentlichen horizontal in dem Behälter 11 ausgerichtet sein. Insbesondere kann die Rührwelle 12 zentrisch in dem Behälter 11 drehbar angebracht sein. Darüber hinaus kann der Behälter 11 feststehend in Bezug zu einer Umgebung sein. Optional kann der Behälter 11 an seiner Innenseite eine Beschichtung aufweisen. Die Beschichtung kann ein reaktives Material, zum Beispiel Palladium, enthalten.

Durch die Beschichtung kann die mechanochemische Reaktionswirkung in dem Behälter 11 verbessert oder überhaupt ermöglicht werden.

Beispielhaft umfasst die Vielzahl von voneinander verschiedenen Aktivierungszonen Z1, Z2, Z3, Z4, Z5 eine Einlaufzone Z1 zum verbesserten Einzug des zu aktivierenden Stoffes und/oder Stoffgemisches, eine Zerkleinerungszone Z2 zur Bereitstellung einer für die Aktivierung geeigneten Partikelgrößenverteilung, eine Aktivierungszone Z3 zur Schaffung einer größtmöglichen Aktivierung, eine optionale Relaxationszone Z4 und eine Austragszone Z5 zur Rückhaltung der Aktivierungskörper K und Vermeidung von Reaktionsprozessen des aktivierten Stoffes und/oder Stoffgemisches. Zum Beispiel sind die zuvor genannten Aktivierungszonen in der genannten Reihenfolge entlang der Durchströmungsrichtung angeordnet.

Dabei kann die Einlaufzone zumindest ein Einlaufwerkzeug aufweisen, wobei das Einlaufwerkzeug insbesondere als Einzugsschnecke, als Vorbrechelement 19 oder vergleichbares ausgebildet ist. Das zumindest eine Einlaufwerkzeug kann mehrere Einlaufwerkzeuge gleicher Art oder verschiedener Art kombinieren. Die Zerkleinerungszone bzw. Voraktivierungszone Z2 kann insbesondere dazu ausgebildet sein, eine für die Aktivierung geeignete Partikelgrößenverteilung zu erzielen, wobei je nach Art des zu aktivierenden Stoffes und/oder Stoffgemisches eine Erzeugung oder Vermeidung von Feinstanteil vorgesehen ist. Weiterhin kann die Aktivierungszone Z3 dazu ausgebildet sein, eine größtmögliche Aktivierung über eine Steuerung einer Verweilzeit in der Aktivierungszone Z3 und eine Beanspruchungsart und Beanspruchungsintensität in der Aktivierungszone Z3 zu erreichen. Die Austragszone bzw. Auslaufzone Z5 kann ein Trennsystem 18 zur Rückhaltung der Aktivierungskörper K und Vermeidung von Reaktionsprozessen des aktivierten Stoffes und/oder Stoffgemisches aufweisen.

Die Vielzahl von Vorrichtungen 1 weisen vorzugsweise die gleichen Merkmale auf, das heißt sie können gleichartig ausgebildet sein. Allerdings ist die Erfindung nicht auf gleichartig ausgebildete Vorrichtungen 1 auf der Rührwelle 12 beschränkt, sondern es können einzelne Eigenschaften der Vorrichtungen 1 voneinander abweichen und insbesondere an Anforderungen in den jeweiligen Aktivierungszonen Z1, Z2, Z3, Z4, Z5 angepasst sein.

Auf der Rührwelle 12 sind beispielhaft eine Vielzahl von Vorrichtungen 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen montiert, von denen acht beispielhaft abgebildet sind. Jede Vorrichtung 1 umfasst hier eine scheibenartige Rührkörpereinrichtung 2 und vier Schlageinheiten 3. Die vier Schlageinheiten 3 weisen jeweils einen Verlängerungsarm 7 und einen Kopfbereich 4 mit einer Aktivierungsfläche 5 zum Zusammenwirken mit Aktivierungskörpern K auf. Die vier Schlageinheiten 3 sind radial außen in Bezug zu einer Rotationsachse der scheibenartigen Rührkörpereinrichtung 2 an der scheibenartigen Rührkörpereinrichtung 2 befestigt.

Der Kopfbereich 4 kann eine im Wesentlichen würfelartige Form aufweisen. Der Verlängerungsarm 7 kann zum Beispiel zwischen der scheibenartigen Rührkörpereinrichtung 2 und der Aktivierungsfläche 5 angeordnet sein. Dabei kann ein erster Endbereich des Verlängerungsarms 7 an der scheibenartigen Rührkörpereinrichtung 2 befestigt sein und ein zweiter, dem ersten Endbereich abgewandter Endbereich mit der Aktivierungsfläche 5 gekoppelt sein.

Darüber hinaus ist hier beispielhaft zwischen benachbarten Vorrichtungen 1 jeweils eine Distanzbuchse 17 angeordnet. Die Distanzbuchse 17 kann im Durchmesser und in der Form variieren. Die Distanzbuchse 17 dient insbesondere einer gezielten Führung der Luft und des zu aktivierenden Stoffes und/oder Stoffgemisches durch den Behälter 11.

Hier ist die Aktivierungsfläche 5 in Bezug zu der Rotationsachse X beispielhaft in einem Winkelbereich 8 von etwa 0° bis etwa 45° ausgerichtet. Somit kann die Aktivierungsfläche Scherkräfte verbessern und dadurch eine höhere Aktivierung bei niedrigerem Energieverbrauch bewirken. Die Aktivierungsfläche 5 ist beispielsweise im Wesentlichen eben ausgebildet.

Zum Beispiel kann die Rührwelle 12 einteilig oder mehrteilig ausgebildet sein. Alternativ oder zusätzlich kann die Rührwelle 12 als Massivwelle oder als Hohlwelle ausgebildet sein.

Anhand einer vorbestimmten Kombination von verschiedenen konstruktiven Aktivierungsparametern und von verschiedenen prozesstechnischen Aktivierungsparametern kann der zu aktivierende Stoff und/oder das Stoffgemisch durch die Aktivierungszonen Z1, Z2, Z3, Z4, Z5 geführt werden. Somit kann ein optimaler mechanochemischer Reaktionsablauf bereitgestellt werden. Die konstruktiven Aktivierungsparameter umfassen zum Beispiel unterschiedliche geometrische Ausführungen der scheibenartigen Rührkörpereinrichtung 2, des Verlängerungsarms 7 und/oder des Kopfbereichs 4 der Schlageinheit 3. Die prozesstechnischen Aktivierungsparameter umfassen zum Beispiel eine Umfangsgeschwindigkeit, einen Füllgrad der Aktivierungskörper, eine Temperatur in dem Behälter 11 und/oder eine Durchströmung des Behälters mit einem für die mechanochemische Reaktion notwendigen Prozessgas.

Optional kann der Kopfbereich 4 austauschbar mit der Schlageinheit 3 verbunden sein. Auf diese Weise kann der Kopfbereich 4 nach Bedarf gewechselt werden, wenn zum Beispiel die Aktivierungsfläche 5 verschlissen ist oder wenn zum Beispiel eine andere Größe und/oder Form der Aktivierungsfläche 5 für den zu aktivierenden Stoff und/oder Stoffgemisch vorgesehen ist. Damit kann der Kopfbereich 4 modulartig ausgebildet sein. Vorteilhafterweise kann somit eine Flächenbelastung der Aktivierungsfläche 5 verbessert oder eine Breite des Kopfbereichs 4 in Abhängigkeit von einer Härte des zu aktivierenden Stoffes und/oder Stoffgemisches verändert werden.

Insbesondere ist das Rührwerkssystem 10 dazu eingerichtet ein Verfahren zum Betreiben eines Rührwerkssystems zur mechanischen Aktivierung von organischen und/oder anorganischen Stoffen und/oder Stoffgemischen in chemischen, pharmazeutischen, lebensmitteltechnischen und/oder baustofftechnischen Anwendungen nach Fig. 3 durchzuführen.

Fig. 3 zeigt ein schematisches Ablaufdiagramm eines Verfahrens S zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung.

Das Verfahren umfasst beispielhaft die Schritte Zuführen S1 von einem zu aktivierenden Stoff und/oder Stoffgemisch, Zuführen S2 eines Prozessgasstroms in einen Behälter 11, mechanisches Aktivieren S3 des Stoffes und/oder Stoffgemisches und Abführen S4 des aktivierten Stoffes und/oder Stoffgemisches.

In dem Schritt Zuführen S1 von dem zu aktivierenden Stoff und/oder Stoffgemisch wird der zu aktivierende Stoff und/oder Stoffgemisch durch eine Einlauföffnung 15 in den Behälter 11 zugeführt, der Aktivierungskörper K bevorratet.

In dem Schritt Zuführen S2 wird der Prozessgasstrom in den Behälter 11 zugeführt, wobei der Prozessgasstrom dazu ausgebildet ist, einen Transport des zu aktivierenden Stoffes und/oder Stoffgemisches zu unterstützen und dabei den zu aktivierenden Stoff und/oder Stoffgemisch zu kühlen. Der Prozessgasstrom kann einen Fluidisierungsgasstrom, der durch die Einlauföffnung 15 in den Behälter 11 strömt, einen Spaltgasstrom, der durch eine Zusatzöffnung 21 in den Behälter 11 strömt, oder einen Bypassgasstrom, der durch eine Bypassöffnung 22 in einen Auslassbereich des Behälters 11 strömt, umfassen. Der Prozessgasstrom kann ebenso zwei oder drei der zuvor genannten Luftströme umfassen. Somit kann dem Behälter 11 an verschiedenen Stellen ein Luftstrom zugeführt werden, welcher insgesamt den Prozessgasstrom ergibt.

In dem Schritt mechanisches Aktivieren S3 des Stoffes und/oder Stoffgemisches wird der Stoff und/oder Stoffgemisch in dem Behälter 11 mithilfe einer rotierenden Vorrichtung 1 mechanisch aktiviert. Dabei wirkt mindestens eine Schlageinheit 3 der Vorrichtung 1 mit den Aktivierungskörpern K zusammen.

In dem Schritt Abführen S4 wird der durch die Aktivierungskörper K aktivierten Stoff und/oder Stoffgemisch durch eine Auslauföffnung 16 aus dem Behälter 11 abgeführt.

Eine Verweilzeit des Stoffes und/oder Stoffgemisches in dem Behälter 11 beträgt von etwa 1 min bis etwa 110 min, beispielsweise von etwa 3 min bis etwa 90 min, vorzugsweise von etwa 10 min bis etwa 55 min, insbesondere etwa 20 min. Die Verweilzeit kann mittels einer Durchsatzmenge des Stoffes und/oder Stoffgemisches, einer Gesamtmenge des Prozessgasstroms und/oder einer Anwendungshäufigkeit der Schritte Zuführen S1, S2, mechanisches Aktivieren S3 und Abführen S4 eingestellt werden. Somit kann die Verweilzeit durch mindestens eine dieser drei Stellgrößen beeinflusst werden.

Dabei kann die Durchsatzmenge in einem Bereich von etwa 8 kg/h bis etwa 100.000 kg/h, beispielsweise in einem Bereich von etwa 10 kg/h bis etwa 600 kg/h oder von etwa 1.000 kg/h bis etwa 20.000 kg/h, insbesondere bei etwa 75 kg/h, liegen. Die Durchsatzmenge kann in Abhängigkeit von einer Nennleistung des Rührwerkssystems 10 festgelegt werden. Auf diese Weise kann die Verweilzeit je nach einer Größe des Rührwerkssystems 10 in einem optimalen Bereich eingestellt werden. Zum Beispiel kann für ein Rührwerkssystem 10 mit einer Nennleistung von etwa 150 kW die Durchsatzmenge in einem Bereich von 10 kg/h bis 600 kg/h liegen. Für ein Rührwerkssystem 10 mit einer Nennleistung von etwa 3 MW kann die Durchsatzmenge in einem Bereich von 1.000 kg/h bis 20.000 kg/h liegen. Für ein Rührwerkssystem 10 mit einer Nennleistung von etwa 12 MW kann die Durchsatzmenge zum Beispiel in einem Bereich von 1.000 kg/h bis 100.000 kg/h liegen. Eine Skalierung kann dabei nach einem spezifischem Energieeintrag erfolgen.

Alternativ oder zusätzlich kann die Gesamtmenge des Prozessgasstroms nahezu konstant gehalten werden und eine Summe aus dem Fluidisierungsgasstrom, dem Spaltgasstrom und dem Bypassgasstrom sein. Um eine Gesamtmenge des Prozessgasstroms durch den Behälter 11 konstant zu halten, kann zum Beispiel der Bypassgasstrom so geregelt werden, dass er an eine Menge des zu aktivierenden Stoffes und/oder Stoffgemisches bzw. die Materialmenge angepasst wird. Die Gesamtmenge des Prozessgasstroms kann zum Beispiel aus dem Quotient von der Durchsatzmenge und 0,1-2,0 kg/m³ berechnet werden.

Der Fluidisierungsgasstrom, der Spaltgasstrom und der Bypassgasstrom können durch eine Hauptgebläseeinrichtung 23 dem Behälter 11 zugeführt und abgeführt werden, indem die Hauptgebläseeinrichtung 23 stromabwärts der Auslauföffnung 16 angeordnet ist und einen Unterdruck an der Auslauföffnung 16 im Verhältnis zu einem Umgebungsdruck erzeugt, so dass der Fluidisierungsgasstrom, der Spaltgasstrom und der Bypassgasstrom durch ihre jeweilige Öffnung 15; 21; 22 in den Behälter 11 gesaugt werden. Das heißt, die Hauptgebläseeinrichtung 23 kann mit anderen Worten im Unterdruck betrieben werden. Zusätzlich kann stromaufwärts der Einlauföffnung 15, der Zusatzöffnung 21 und/oder der Bypassöffnung 22 jeweils eine Gebläseeinrichtung 24 angeordnet sein, um das Zuführen des Fluidisierungsgasstroms, des Spaltgasstroms oder des Bypassgasstroms zu unterstützen. Das bedeutet, der Fluidisierungsgasstrom, der Spaltgasstrom und/oder der Bypassgasstrom können jeweils über ein positives Druckgebläse bzw. die Gebläseeinrichtung 24 in den Behälter 11 eingebracht werden. Vorzugsweise kann die Gebläseeinrichtung 24 für den Fluidisierungsgasstrom auf einen konstanten Volumenstrom geregelt werden. Durch die Kombination von Unterdruckgebläse und Überdruckgebläsen, also von der Hauptgebläseeinrichtung 23 und den optionalen Gebläseeinrichtungen 24, kann ein benötigtes Gesamtdruckgefälle des Rührwerkssystems 10 in energetisch sinnvolle Druckabschnitte eingeteilt und das Rührwerkssystem 10 im optimalen Betriebspunkt gefahren bzw. betrieben werden.

Weiterhin kann der Fluidisierungsgasstrom in Bezug auf einen radial zu der Rührwelle 12 orientierten Querschnitt A des Behälters 11, wie er in Fig. 2 illustriert ist, eine Strömungsgeschwindigkeit im Bereich von etwa 0,1 m/s bis etwa 10 m/s aufweisen. Beispielsweise kann der Fluidisierungsgasstrom auf den radial zu der Rührwelle 12 orientierten Querschnitt A zwischen der Vorrichtung 1 und einem Trennsystem 18, also stromabwärts der Vorrichtung 1 und stromaufwärts des Trennsystems 18, bezogen werden.

Zum Beispiel kann der Prozessgasstrom an der Auslauföffnung 16 eine Strömungsgeschwindigkeit im Bereich von etwa 10 m/s bis etwa 30 m/s, insbesondere im Bereich von etwa 15 m/s bis etwa 25 m/s, aufweisen. Insbesondere kann die Strömungsgeschwindigkeit an der Auslauföffnung 16 auf den in Fig. 2 abgebildeten Querschnitt B bezogen sein.

Optional kann die Rührwelle 12 und/oder die Vorrichtung 1 von dem Fluidisierungsgasstrom umspült werden, damit der Stoff und/oder Stoffgemisch aus dem Behälter 11 transportiert wird ohne dabei die Verweilzeit zu verändern.

Eine Anwendungshäufigkeit der Schritte Zuführen S1 von einem zu aktivierenden Stoff und/oder Stoffgemisch, Zuführen S2 des Prozessgasstroms, mechanisches Aktivieren S3 und Abführen S4 kann in dieser Reihenfolge eins bis sechs Durchläufe, insbesondere eins bis drei Durchläufe, umfassen. Die Anwendungshäufigkeit ist dabei nicht auf ein spezifisches Rührwerkssystem beschränkt, sondern kann bei N Durchläufen in N hintereinandergeschalteten Rührwerkssystemen 10 oder durch die wiederholte Nutzung eines einzelnen Rührwerkssystems 10 durchgeführt werden. Ebenfalls können bis zu N-1 Durchläufe anhand eines einzelnen Rührwerkssystems 10 durchgeführt werden und die verbleibenden Durchläufe anhand eines nachgeschalteten Rührwerkssystems durchgeführt werden. Die Anwendungshäufigkeit kann dabei in Abhängigkeit der Durchsatzmenge gewählt werden.

Ein spezifischer Energieeintrag in den Behälter 11 kann abhängig von einer Umfangsgeschwindigkeit der mindestens einen Schlageinheit 3, einem Füllgrad des Behälters 11, einem Durchmesser der Aktivierungskörper K und/oder einer Ausformung des Behälters 11 sein. Durch den spezifischen Energieeintrag kann der Aktivierungsgrad direkt beeinflusst werden. Anhand einer vorbestimmten Kombination von verschiedenen konstruktiven Aktivierungsparametern und von verschiedenen prozesstechnischen Aktivierungsparametern, wie den oben genannten, kann der zu aktivierende Stoff und/oder das Stoffgemisch durch die Aktivierungszonen geführt werden. Die konstruktiven Aktivierungsparameter umfassen zum Beispiel unterschiedliche geometrische Ausführungen der scheibenartigen Rührkörpereinrichtung, des Verlängerungsarms und/oder des Kopfbereichs der Schlageinheit. Der spezifische Energieeintrag kann zum Beispiel etwa 0,05 kWh/kg bis etwa 6 kWh/kg, insbesondere etwa 0,1 kWh/kg bis etwa 4 kWh/kg, besonders bevorzugt etwa 0,7 kWh/kg, betragen.

Beispielsweise kann die mindestens eine Schlageinheit 3, insbesondere ein radial äußeres Ende der mindestens einen Schlageinheit 3, eine Umfangsgeschwindigkeit im Bereich von etwa 1 m/s bis etwa 10 m/s, beispielsweise im Bereich von etwa 3,5 m/s bis etwa 8 m/s, insbesondere im Bereich von etwa 4,3 m/s bis etwa 6,5 m/s und/oder im Bereich von etwa 7 m/s bis etwa 8 m/s, besonders bevorzugt von etwa 5,8 m/s, aufweisen.

Ferner kann der Behälter 11 eine Innentemperatur im Bereich von etwa 10 °C bis etwa 400 °C, beispielsweise im Bereich von etwa 20 °C bis etwa 250 °C, insbesondere im Bereich von etwa 100 °C bis etwa 200 °C, aufweisen. Zum Beispiel kann die Innentemperatur abhängig von Eigenschaften, wie zum Beispiel einer Temperatur und/oder einer Menge, eines Kühlmediums zur Kühlung des Behälters 11 gewählt werden. Ferner kann der Behälter 11 einen Doppelmantel zur thermischen Regulierung seines Innenraums gegenüber einer Umgebung aufweisen. Alternativ oder zusätzlich kann die Innentemperatur abhängig von einer Temperatur und/oder der Gesamtmenge des Prozessgasstroms gewählt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

Ferner sind einige Beispiele der Erfindung beschrieben.

Beispiel 1: Verfahren S zur mechanischen Aktivierung von organischen und/oder anorganischen Stoffen und/oder Stoffgemischen in chemischen, pharmazeutischen, lebensmitteltechnischen und/oder baustofftechnischen Anwendungen, das Verfahren S umfassend die Schritte:
Zuführen S1 von einem zu aktivierenden Stoff und/oder Stoffgemisch durch eine Einlauföffnung 15 in einen Behälter 11, der Aktivierungskörper K bevorratet;
Zuführen S2 eines Prozessgasstroms in den Behälter 11, wobei der Prozessgasstrom dazu ausgebildet ist, einen Transport des zu aktivierenden Stoffes und/oder Stoffgemisches zu unterstützen;
mechanisches Aktivieren S3 des Stoffes und/oder Stoffgemisches in dem Behälter 11 mithilfe einer rotierenden Vorrichtung 1, wobei mindestens eine Schlageinheit 3 der Vorrichtung 1 mit den Aktivierungskörpern K zusammenwirkt;
Abführen S4 des durch die Aktivierungskörper K aktivierten Stoffes und/oder Stoffgemisches durch eine Auslauföffnung 16 aus dem Behälter 11,
wobei der Stoff und/oder Stoffgemisch in dem Behälter 11 eine vorbestimmte Verweilzeit verweilt.

Beispiel 2: Verfahren nach Beispiel 1, wobei die vorbestimmte Verweilzeit von etwa 0,1 min bis etwa 120 min, beispielsweise von etwa 3 min bis etwa 90 min, vorzugsweise von etwa 10 min bis etwa 55 min, insbesondere etwa 20 min, beträgt.

Beispiel 3: Verfahren nach Beispiel 1 oder 2, wobei der Prozessgasstrom zumindest einen aus der Gruppe von einem Fluidisierungsgasstrom, der durch die Einlauföffnung 15 in den Behälter 11 strömt, einem Spaltgasstrom, der durch eine Zusatzöffnung 21 in den Behälter 11 strömt, und einem Bypassgasstrom, der durch eine Bypassöffnung 22 in einen Auslassbereich des Behälters 11 strömt, umfasst.

Beispiel 4: Verfahren nach einem der vorhergehenden Beispiele, wobei die vorbestimmte Verweilzeit mittels mindestens einem aus der Gruppe von einer Durchsatzmenge des Stoffes und/oder Stoffgemisches, einer Gesamtmenge des Prozessgasstroms und einer Anwendungshäufigkeit der Schritte Zuführen S1, S2, mechanisches Aktivieren S3 und Abführen S4 eingestellt wird.

Beispiel 5: Verfahren nach Beispiel 4, wobei die Durchsatzmenge in einem Bereich von etwa 8 kg/h bis etwa 100.000 kg/h, beispielsweise in einem Bereich von etwa 10 kg/h bis etwa 600 kg/h oder von etwa 1.000 kg/h bis etwa 20.000 kg/h, insbesondere bei etwa 75 kg/h, liegt.

Beispiel 6: Verfahren nach Beispiel 4 oder 5, wobei die Gesamtmenge des Prozessgasstroms nahezu konstant gehalten wird und eine Summe aus dem Fluidisierungsgasstrom, dem Spaltgasstrom und dem Bypassgasstrom ist.

Beispiel 7: Verfahren nach einem der Beispiele 3 bis 6, wobei der Fluidisierungsgasstrom in Bezug auf einen radial zu der Rührwelle 12 orientierten Querschnitt A des Behälters 11 eine Strömungsgeschwindigkeit im Bereich von etwa 0,1 m/s bis etwa 10 m/s aufweist.

Beispiel 8: Verfahren nach einem der vorhergehenden Beispiele, wobei der Prozessgasstrom an der Auslauföffnung 16 eine Strömungsgeschwindigkeit im Bereich von etwa 10 m/s bis etwa 30 m/s, insbesondere im Bereich von etwa 15 m/s bis etwa 25 m/s, aufweist.

Beispiel 9: Verfahren nach einem der vorhergehenden Beispiele, wobei eine Anwendungshäufigkeit der Schritte Zuführen S1 von einem zu aktivierenden Stoff und/oder Stoffgemisch, Zuführen S2 des Prozessgasstroms, mechanisches Aktivieren S3 und Abführen S4 in dieser Reihenfolge eins bis sechs Durchläufe, insbesondere eins bis drei Durchläufe, umfasst.

Beispiel 10: Verfahren nach einem der vorhergehenden Beispiele, wobei ein spezifischer Energieeintrag in den Behälter 11 abhängig ist von zumindest einem aus der Gruppe von einer Umfangsgeschwindigkeit der mindestens einen Schlageinheit 3, einem Füllgrad des Behälters 11, einem Durchmesser der Aktivierungskörper K und einer Ausformung des Behälters 11.

Beispiel 11: Verfahren nach Beispiel 10, wobei der spezifische Energieeintrag etwa 0,05 kWh/kg bis etwa 6 kWh/kg, insbesondere etwa 0,1 kWh/kg bis etwa 4 kWh/kg, besonders bevorzugt etwa 0,7 kWh/kg, beträgt.

Beispiel 12: Verfahren nach einem der vorhergehenden Beispiele, wobei die mindestens eine Schlageinheit 3, insbesondere ein radial äußeres Ende der mindestens einen Schlageinheit 3, eine Umfangsgeschwindigkeit im Bereich von etwa 1 m/s bis etwa 10 m/s, beispielsweise im Bereich von etwa 3,5 m/s bis etwa 8 m/s, insbesondere im Bereich von etwa 4,3 m/s bis etwa 6,5 m/s und/oder im Bereich von etwa 7 m/s bis etwa 8 m/s, besonders bevorzugt von etwa 5,8 m/s, aufweist.

Beispiel 13: Verfahren nach einem der vorhergehenden Beispiele, wobei der Behälter 11 einen Füllgrad von etwa 40 % bis etwa 80 %, beispielsweise von etwa 50 % bis etwa 70 %, insbesondere von etwa 55 % bis etwa 65 %, besonders bevorzugt etwa 60 %, aufweist.

Beispiel 14: Verfahren nach einem der vorhergehenden Beispiele, wobei die Aktivierungskörper K im Wesentlichen kugelförmig ausgebildet sind, wobei ein kugeläquivalenter Durchmesser der Aktivierungskörper K im Bereich von etwa 1 mm bis etwa 20 mm, beispielsweise im Bereich von etwa 1 mm bis etwa 4 mm oder im Bereich von etwa 4 mm bis etwa 12 mm, insbesondere im Bereich von etwa 4 mm bis etwa 8 mm, liegt.

Beispiel 15: Verfahren nach einem der vorhergehenden Beispiele, wobei der Behälter 11 eine Innentemperatur im Bereich von etwa 10 °C bis etwa 400 °C, beispielsweise im Bereich von etwa 20 °C bis etwa 250 °C, insbesondere im Bereich von etwa 100 °C bis etwa 200 °C, aufweist.

Beispiel 16: Rührwerkssystem 10, das dazu eingerichtet ist, ein Verfahren S nach einem der vorhergehenden Beispiele durchzuführen.

### Bezugszeichenliste

- 1: Vorrichtung
- 2: scheibenartige Rührkörpereinrichtung
- 3: Schlageinheit
- 4: Kopfbereich
- 5: Aktivierungsfläche
- 6: Durchgangsöffnung
- 7: Verlängerungsarm
- 8: Winkelbereich der Aktivierungsfläche
- 9: Winkel zwischen zwei benachbarten Schlageinheiten
- 10: Rührwerkssystem
- 11: Behälter
- 12: Rührwelle
- 13: Temperieraggregat
- 14: Motor
- 15: Einlauföffnung
- 16: Auslauföffnung
- 17: Distanzbuchse
- 18: Trennsystem
- 19: Vorbrechelement
- 20: zusätzliche Öffnung
- 21: Zusatzöffnung
- 22: Bypassöffnung
- 23: Hauptgebläseeinrichtung
- 24: Gebläseeinrichtung

- K: Aktivierungskörper
- X: Rotationsachse
- U: Umfangsrichtung
- Z1: Einlaufzone
- Z2: Zerkleinerungszone
- Z3: Aktivierungszone
- Z4: Relaxationszone
- Z5: Austragszone
- S1: Zuführen von einem zu aktivierenden Stoff und/oder Stoffgemisch
- S2: Zuführen eines Prozessgasstroms
- S3: mechanisches Aktivieren des Stoffes und/oder Stoffgemisches
- S4: Abführen des aktivierten Stoffes und/oder Stoffgemisches

## Patentansprüche

1. Verfahren (S) zur mechanischen Aktivierung von organischen und/oder anorganischen Stoffen und/oder Stoffgemischen in chemischen, pharmazeutischen, lebensmitteltechnischen und/oder baustofftechnischen Anwendungen, das Verfahren (S) umfassend die Schritte:
Zuführen (S1) von einem zu aktivierenden Stoff und/oder Stoffgemisch durch eine Einlauföffnung (15) in einen Behälter (11), der Aktivierungskörper (K) bevorratet;
Zuführen (S2) eines Prozessgasstroms in den Behälter (11), wobei der Prozessgasstrom dazu ausgebildet ist, einen Transport des zu aktivierenden Stoffes und/oder Stoffgemisches zu unterstützen;
mechanisches Aktivieren (S3) des Stoffes und/oder Stoffgemisches in dem Behälter (11) mithilfe einer rotierenden Vorrichtung (1), wobei mindestens eine Schlageinheit (3) der Vorrichtung (1) mit den Aktivierungskörpern (K) zusammenwirkt;
Abführen (S4) des durch die Aktivierungskörper (K) aktivierten Stoffes und/oder Stoffgemisches durch eine Auslauföffnung (16) aus dem Behälter (11),
wobei der Stoff und/oder Stoffgemisch in dem Behälter (11) eine vorbestimmte Verweilzeit verweilt, wobei ein spezifischer Energieeintrag in den Behälter (11) abhängig ist von zumindest einem aus der Gruppe von einer Umfangsgeschwindigkeit der mindestens einen Schlageinheit (3), einem Füllgrad des Behälters (11), einem Durchmesser der Aktivierungskörper (K) und einer Ausformung des Behälters (11).

2. Verfahren nach Anspruch 1, wobei die vorbestimmte Verweilzeit von 0,1 min bis 120 min, beispielsweise von 3 min bis 90 min, vorzugsweise von 10 min bis 55 min, insbesondere 20 min, beträgt.

3. Verfahren nach Anspruch 1 oder 2, wobei der Prozessgasstrom zumindest einen aus der Gruppe von einem Fluidisierungsgasstrom, der durch die Einlauföffnung (15) in den Behälter (11) strömt, einem Spaltgasstrom, der durch eine Zusatzöffnung (21) in den Behälter (11) strömt, und einem Bypassgasstrom, der durch eine Bypassöffnung (22) in einen Auslassbereich des Behälters (11) strömt, umfasst.

4. Verfahren nach einem der vorhergehenden Ansprüche, wobei die vorbestimmte Verweilzeit mittels mindestens einem aus der Gruppe von einer Durchsatzmenge des Stoffes und/oder Stoffgemisches, einer Gesamtmenge des Prozessgasstroms und einer Anwendungshäufigkeit der Schritte Zuführen (S1, S2), mechanisches Aktivieren (S3) und Abführen (S4) eingestellt wird.

5. Verfahren nach Anspruch 4, wobei die Durchsatzmenge in einem Bereich von 8 kg/h bis 100.000 kg/h, beispielsweise in einem Bereich von 10 kg/h bis 600 kg/h oder von 1.000 kg/h bis 20.000 kg/h, insbesondere bei 75 kg/h, liegt.

6. Verfahren nach Anspruch 4 oder 5, wobei die Gesamtmenge des Prozessgasstroms nahezu konstant gehalten wird und eine Summe aus dem Fluidisierungsgasstrom, dem Spaltgasstrom und dem Bypassgasstrom ist.

7. Verfahren nach einem der Ansprüche 3 bis 6, wobei der Fluidisierungsgasstrom in Bezug auf einen radial zu der Rührwelle (12) orientierten Querschnitt (A) des Behälters (11) eine Strömungsgeschwindigkeit im Bereich von 0,1 m/s bis 10 m/s aufweist.

8. Verfahren nach einem der vorhergehenden Ansprüche, wobei der Prozessgasstrom an der Auslauföffnung (16) eine Strömungsgeschwindigkeit im Bereich von 10 m/s bis 30 m/s, insbesondere im Bereich von 15 m/s bis 25 m/s, aufweist.

9. Verfahren nach einem der vorhergehenden Ansprüche, wobei eine Anwendungshäufigkeit der Schritte Zuführen (S1) von einem zu aktivierenden Stoff und/oder Stoffgemisch, Zuführen (S2) des Prozessgasstroms, mechanisches Aktivieren (S3) und Abführen (S4) in dieser Reihenfolge eins bis sechs Durchläufe, insbesondere eins bis drei Durchläufe, umfasst.

10. Verfahren nach einem der vorhergehenden Ansprüche, wobei der spezifische Energieeintrag 0,05 kWh/kg bis 6 kWh/kg, insbesondere 0,1 kWh/kg bis 4 kWh/kg, besonders bevorzugt 0,7 kWh/kg, beträgt.

11. Verfahren nach einem der vorhergehenden Ansprüche, wobei die mindestens eine Schlageinheit (3), insbesondere ein radial äußeres Ende der mindestens einen Schlageinheit (3), eine Umfangsgeschwindigkeit im Bereich von 1 m/s bis 10 m/s, beispielsweise im Bereich von 3,5 m/s bis 8 m/s, insbesondere im Bereich von 4,3 m/s bis 6,5 m/s und/oder im Bereich von 7 m/s bis 8 m/s, besonders bevorzugt von 5,8 m/s, aufweist.

12. Verfahren nach einem der vorhergehenden Ansprüche, wobei der Behälter (11) einen Füllgrad von 40 % bis 80 %, beispielsweise von 50 % bis 70 %, insbesondere von 55 % bis 65 %, besonders bevorzugt 60 %, aufweist.

13. Verfahren nach einem der vorhergehenden Ansprüche, wobei die Aktivierungskörper (K) im Wesentlichen kugelförmig ausgebildet sind, wobei ein kugeläquivalenter Durchmesser der Aktivierungskörper (K) im Bereich von 1 mm bis 20 mm, beispielsweise im Bereich von 1 mm bis 4 mm oder im Bereich von 4 mm bis 12 mm, insbesondere im Bereich von 4 mm bis 8 mm, liegt.

14. Verfahren nach einem der vorhergehenden Ansprüche, wobei der Behälter (11) eine Innentemperatur im Bereich von 10 °C bis 400 °C, beispielsweise im Bereich von 20 °C bis 250 °C, insbesondere im Bereich von 100 °C bis 200 °C, aufweist.

15. Rührwerkssystem (10), das dazu eingerichtet ist, ein Verfahren (S) nach einem der vorhergehenden Ansprüche durchzuführen.
